Europäisches Patentamt

European Patent Office

Office européen des brevets

(19)

(11) Veröffentlichungsnummer: **0 014 420**
**B1**

(12) **EUROPÄISCHE PATENTSCHRIFT**

(45) Veröffentlichungstag der Patentschrift: **22.06.83**

(21) Anmeldenummer: **80100438.3**

(22) Anmeldetag: **29.01.80**

(51) Int. Cl.³: **C 08 J 3/00,**
**C 08 F 255/02,**
**C 08 F 263/04**

(54) Haftklebstoffe, ihre Herstellung und Verwendung.

(30) Priorität: **31.01.79 DE 2903687**

(43) Veröffentlichungstag der Anmeldung:
**20.08.80 Patentblatt 80/17**

(45) Bekanntmachung des Hinweises auf die Patenterteilung:
**22.06.83 Patentblatt 83/25**

(84) Benannte Vertragsstaaten:
**BE DE FR GB IT NL**

(56) Entgegenhaltungen:
**DE - A - 1 906 049**
**DE - A - 2 253 245**
**FR - A - 1 207 816**
**FR - A - 2 027 991**
**FR - A - 2 102 877**

(73) Patentinhaber: **WACKER-CHEMIE GMBH**
**Prinzregentenstrasse 22**
**D-8000 München 22 (DE)**

(72) Erfinder: **Weissgerber, Rudolf, Dr., Dipl.-Chem.**
**Gluckstrasse 2**
**D-8263 Burghausen (DE)**
Erfinder: **Stoll, Alois, Dr., Dipl.-Chem.**
**Mehringerstrasse 2**
**D-8263 Burghausen (DE)**
Erfinder: **Kandler, Herbert, Dr., Dipl.-Chem.**
**Marienbergerstrasse 48 d**
**D-8263 Burghausen (DE)**
Erfinder: **Nunner, Hans-Herbert**
**Hermann-Hiller-Strasse 1**
**D-8263 Burghausen (DE)**
Erfinder: **Eichelseder, Christine**
**Röntgenstrasse 4c**
**D-8263 Burghausen (DE)**
Erfinder: **Pangerl, Helmut**
**Augenthalerweg 17**
**D-8263 Burghausen (DE)**

**Die Akte enthält technische Angaben, die nach dem Eingang der Anmeldung eingereicht wurden und die nicht in dieser Patentschrift enthalten sind.**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

Haftklebstoffe, ihre Herstellung und Verwendung

Für den Einsatz von Polymeren als Klebemittel sind bereits zahlreiche Homo-, Co-, Ter- und Pfropfpolymere sowie deren Mischungen auch mit natürlich vorkommenden Harzen oder Wachsen vorgeschlagen worden. Die fortschreitende Technisierung stellt jedoch immer höhere Anforderungen an die Klebrigkeit und Kohäsion. Die Klebrigkeit soll dabei möglichst sofort zur Wirkung kommen. Zudem dürfen diese Eigenschaften nicht durch Alterung verlorengehen.

Oftmals werden derartige Polymerklebstoffe als Haftklebstoffe, die häufig auch als druckempfindliche Klebstoffe bezeichnet werden, auf verschiedensten Trägern verwendet, insbesondere auf selbstklebenden Etiketten, Schildern, Klebebändern, Dekorations- und anderen Folien und für Fußboden-beläge.

Haftkleber sollen die Eigenschaften Daueroberflächenklebrigkeit und Kohäsion in möglichst hohem Maße in sich vereinen. Sie sollen auf verschiedensten Untergründen auf leichten Druck hin anhaften, also z.B. ohne Anreiben oder Befeuchten mit Lösemitteln, und sich vom Untergrund ohne Zurückbleiben von Klebstoffresten wieder ablösen lassen. Ein Übergang des Klebers vom Träger auf den Untergrund beim Wiederablösen ist unerwünscht.

Bisher technisch häufig verwendete Haftkleber sind z.B. Blockcopolymere des Styrols mit Isopren bzw. Butadien und Äthylen-Vinylacetat-Copolymere, die als Abmischungen mit niedermolekularen Harzen, Wachsen, Weichmachern oder Lösungsmitteln eingesetzt werden.

Für das technisch vorteilhafte Schmelzauftragungsverfahren können diese Haftkleber nur bei Verwendung von Polymerisaten mit niedrigem Molekulargewicht und von hohen Zusätzen an niedermolekularen Stoffen, wie den vorstehend genannten, eingesetzt werden. Dabei verschlechtern sich jedoch vielfach die Kohäsion und die Alterungsbeständigkeit. Außerdem eignen sich die auf diese Weise erhaltenen Klebstoffe nur schlecht zum Auftrag auf Kunststoffe, insbesondere Kunststoffolien, die mit sogenannten Monomerweichmachern, z.B. Phthalat-und/oder Phosphatweichmachern weichgemacht sind. Beispiele für solche Kunststoffe sind Homo- und Copolymerisate von Äthylen, Propylen, ungesättigten Estern und/oder Vinylchlorid.

Beim Altern oder noch schneller, wenn ein so beschichtetes Kunststoffteil, insbesondere eine Folie, erhöhter Umgebungstemperatur ausgesetzt ist, kommt es zu einer starken Wanderung des Weichmachers in die Klebstoffschicht. Die Eigenschaften des Klebstoffs werden dadurch negativ beeinflußt: Die Kohäsion sinkt stark ab, der Klebstoff wird schmierig, neigt zum Einwandern in poröse Untergründe und zum Hinterlassen von starken Klebstoffresten beim Wiederablösen des Kunststoffteils vom Untergrund. Bei weichgemachten Kunststoffolien führt die Weichmacherwanderung außerdem zu starker Schrumpfung der Folie. Dies macht sich z.B. durch unschöne, verschmutzte Ränder um die aufgeklebte Folie bemerkbar. Insbesondere zeigt sich das Problem des Folienschrumpfens bei der Anwendung von Dekorationsfolien aus Weich-Polyvinylchlorid (Weich-PVC), wie sie sowohl professionell als auch im Haushalt häufig benutzt werden. Hier führt die Folienschrumpfung zu häßlichen Lücken an Rändern und Stoßkanten von nebeneinander verklebten Folienflächen.

In der DE—AS 22 53 245 sind Äthylen-Vinylester-Pfropfcopolymere und deren Verwendung als Schmelzhaftklebstoffe beschrieben. Diese beispielsweise für selbstklebende Papieretiketten gut geeigneten Pfropfcopolymeren können auch auf weichgemachte Kunststoffteile, z.B. -folien aufgetragen werden. Um die vorstehend genannten Nachteile zu vermeiden, müssen dazu diese Pfropfcopolymerisate mit Weichmachern abgemischt werden, damit ein weiteres Einwandern des im Kunststoff enthaltenen Weichmachers in die Klebeschicht verhindert wird, und außerdem müssen ihre K-Werte sehr hoch sein, damit die weichmacherhaltigen Klebermischungen nicht schmierig werden.

Mit solchen Klebern hergestellte Verklebungen können sich im Laufe der Zeit lösen, wobei bei gut haftenden Untergründen der Klebstoff häufig in starkem Maße am Untergrund haften bleibt, was anschließend aufwendige Reinigungsarbeiten nötig macht. Das gleiche tritt beim Wiederablösen des angeklebten Teils, z.B. einer Kunststoffolie auf. Die zu geringe Haftung des Klebstoffs am Träger macht eine aufwendige haftungsverbessernde Vorbehandlung des Trägers erforderlich. Dies erfolgt meist durch Aufbringen einer Grundierschicht oder durch eine physikalische oder chemische Behandlung, z.B. mit elektrischen Entladungen (Corona-Vorbehandlung), durch Beflammen oder mechanisches Aufrauhen. Die Vorbehandlung der Oberfläche ist häufig auch bei nicht weichmacherhaltigen Trägern erforderlich, z.B. bei Textilien, Kunststoffen oder Metallen, um ein Ablösen der Haftkleber der DE—AS 22 53 245 zu verhindern.

Speziell beim Anwenden größerer mit Haftkleber beschichteter Folien, z.B. Dekorationsfolien aus Kunststoff oder Metall, kann es leicht versehentlich zum Verkleben Folienrückseite gegen Folienrückseite, das heißt, Klebstofffilm gegen Klebstofffilm kommen. Zieht man anschließend die Folienstücke wieder auseinander, lassen sich die beiden Klebstofffilme im allgemeinen bei nicht vorbehandelten Folien nicht mehr trennen, sondern einer der beiden Filme löst sich aufgrund zu niedriger Haftung von der Folienoberfläche. Die Klebefolie ist damit unbrauchbar.

Aufgabe der Erfindung war es daher, Haftklebstoffe aufzuzeigen, die die eingangs genannten Aufgaben lösen, also die hohe Ad- und Kohäsion, Dauerklebrigkeit und Alterungsbeständigkeit besitzen, nicht zur Ablösung vom Träger neigen, gegebenenfalls auch eine Schrumpfung des Trägers verhindern und die Möglichkeit des Schmelzauftrags bieten.

Gegenstand der Erfindung sind Haftklebstoffe, enthaltend Pfropfcopolymere der Zusammensetzung 5 bis 30 Gew.-%, vorzugsweise 5 bis 20 Gew.-% Pfropfgrundlage, bestehend aus einem Copolymeren aus 40 bis 85 Gew.-%, vorzugsweise 50 bis 75 Gew.-% Äthyleneinheiten und 15 bis 60 Gew.-%, vorzugsweise 25 bis 50 Gew.-% Vinylacetateinheiten sowie gegebenenfalls bis zu 10 Gew.-% Einheiten weiterer ungesättigter Verbindungen und/oder Polyvinyläther und/oder Mischpolymerisate von Äthylen mit Estern der Acrylsäure und/oder der Methacrylsäure mit Alkoholen mit 2 bis 8 Kohlenstoffatomen und 70 bis 95 Gew.-%, vorzugsweise 80 bis 95 Gew.-% aufgepfropfter Monomereinheiten, die ihrerseits aus

a) 30 bis 80 Gew.-%, vorzugsweise 45 bis 75 Gew.-%, Vinylestereinheiten von Carbonsäuren mit 2 bis 4 Kohlenstoffatomen,

b) 20 bis 70 Gew.-%, vorzugsweise 25 bis 45 Gew.-%, Vinylestereinheiten von Carbonsäuren mit 6 bis 18 Kohlenstoffatomen und/oder Estereinheiten alpha, beta-ungesättigter Carbonsäuren mit Alkoholen mit 3 bis 18 Kohlenstoffatomen und/oder Mono- oder Diestereinheiten ungesättigter Dicarbonsäuren mit Alkoholen mit 3 bis 18 Kohlenstoffatomen,

c) 0,5 bis 15 Gew.-%, vorzugsweise 1 bis 10 Gew.-%, N-Vinyl-2-Pyrrolidon und

d) 0 bis 20 Gew.-% weiteren olefinisch ungesättigten copolymereisierbaren Monomereinheiten bestehen.

Als Pfropfgrundlage kann das Äthylen-Vinylacetat-Copolymere ganz oder teilweise, vorzugsweise zu bis zu 75 Gew.-%, besonders vorzugsweise zu 15 bis 60 Gew.-%, durch die oben genannten anderen in dem Monomergemisch löslichen Polymeren ersetzt werden.

Hergestellt werden die erfindungsgemäßen Pfropfcopolymerisate in der Weise, daß das oder die Copolymeren in dem Monomerengemisch gelöst werden und das Gemisch in Gegenwart von Radikalbildnern in Mengen von 0,02 bis 4, vorzugsweise 0,08 bis 0,8 Gew.-%, bezogen auf Monomerengemisch, bei —20 bis 150°C pfropfpolymerisiert wird. Als Pfropfgrundlage kommen vor allem handelsübliche Äthylen-Vinylacetat-Copolymere in Frage, die nach bekannten Verfahren, z.B. in wäßriger Emulsion, in Substanz oder in Lösung radikalisch polymerisiert worden sind. Der Äthylengehalt beträgt vorzugsweise 50 bis 75 Gew.-%, und sie besitzen meistenteils einen Schmelzindex $(i_2)$ von 5 bis 200, vorzugsweise 5 bis 100. Sie können auch weitere ungesättigte Verbindungen bis zu 10 Gew.-%, insbesondere ungesättigte Carbonsäuren, einpolymerisiert enthalten. Auch Copolymerisate mit bis zu 10 Gew.-% Vinylalkoholeinheiten sind gegebenenfalls verwendbar.

Beispiele für die unter a) genannten Monomeren sind Vinylpropionat, Vinylbutyrat und vorzugsweise Vinylacetat. Vorzugsweise kommen sie in Mengen von 45 bis 75 Gew.-%, bezogen auf Gesamtmonomerenmenge, zur Anwendung. Es können auch Gemische eingesetzt werden.

Als Beispiele für die unter b) aufgeführten Vinylester mit Carbonsäuren mit 6 bis 18 Kohlenstoffatomen seien genannt: 2-Äthylhexansäurevinylester, Vinylcapronat, Vinylcaprinat, Isononansäurevinylester, Versaticsäurevinylester, Vinyllaurat und Vinylstearat. Es können auch Gemische eingesetzt werden.

Beispiele für alpha, beta-ungesättigte Carbonsäuren und ungesättigte Dicarbonsäuren sind Acryl-, Methacryl-, Croton-, Itakon-, Fumar-, Maleinsäure, und Beispiele der mit ihnen veresterten geradkettigen oder verzweigten Alkohole sind Propyl-, Butyl-, 2-Äthylhexyl-, Stearyl- und Glycidylalkohol. Die Monomeren können einzeln oder im Gemisch eingesetzt werden, vorzugsweise in Mengen von 25 bis 45 Gew.-%, bezogen auf Gesamtmonomerenmenge. Es können auch Gemische eingesetzt werden.

N - Vinyl - 2 - Pyrrolidon wird dem Monomerengemisch vorzugsweise in Mengen von 1 bis 10 Gew.-%, bezogen auf Gesamtmonomerenmenge, zugesetzt.

Gegebenenfalls können auch weitere Monomere bis zu 20 Gew.-%, bezogen auf Gesamtmonomerenmenge, mitverwendet werden. Vorzugsweise kommen dabei ungesättigte Säuren, wie z.B. Acryl, Methacryl-, Croton-, Fumar- und Maleinsäure, aber auch Acrylamid, substituierte Acrylamide, Olefine, wie z.B. Äthylen, Propylen, Styrol, Acrylnitril und Vinylchlorid, in Frage. Es können auch Gemische eingesetzt werden.

Zur Durchführung der Pfropfung wird das Copolymere und/oder gegebenenfalls die weiteren Polymeren in der Monomerenmischung gelöst. Also Radikalbildner zum Initiieren der Pfropfung kommen z.B. Azo- oder Peroxi-Verbindungen, wie z.B. Azoisobutyronitril, Lauroylperoxid, tert.-Butylhydroperoxid, Benzoylperoxid, Diisopropylperoxidicarbonat, 2,2 - Bis(tert. - butylperoxi) - butan und Butylperpivalet in Frage. Auch Redoxsysteme aus Reduktionsmitteln, wie z.B. Hydrazine, Amine und Sulfinsäuren, und Peroxiden können zum Einsatz gelangen. Zur Erzielung eines gleichmässigen Polymerisationsverlaufs und vollständiger Umsetzung können auch mehrere Katalysatoren verwendet werden und gegebenenfalls über die Polymerisation hin verteilt zugegeben werden.

Die Pfropfpolymerisation wird bei −20 bis 150°C, vorzugsweise 50 bis 130°C, wobei die Temperatur oftmals während der Polymerisation gesteigert wird, und meistenteils bei autogenem Druck der Monomeren durchgeführt. Beim Einsatz von gasförmigen Monomeren, wie z.B. Äthylen, ist es oftmals notwendig, erhöhten Druck anzuwenden. Im allgemeinen braucht dieser nicht höher als 140 bar (absolut), vorzugsweise 20 bis 120 bar, zu sein.

In manchen Fällen ist est vorteilhaft, nicht das gesamte Monomerengemisch vorzulegen, sondern Teile davon zu dosieren oder nur einzelne Monomere der Monomerenmischung vorzulegen und den Rest während der Polymerisation zuzugeben. Auch kann die Polymerisation nur mit einem Anteil des im Monomeren gelösten Polymerisats begonnen werden und eine weitere Zuführung der Monomeren-Copolymeren-Mischung während der Polymerisation erfolgen.

Der K-Wert des so hergestellten Produktes soll im allgemeinen zwischen 45 und 80, vorzugsweise 50 und 70, gemessen nach Fikentscher in 1%-iger Acetonlösung, liegen. Er kann gegebenenfalls durch Zugabe von Polymerisationsreglern, wie z.B. Aldehyden, Halogenkohlenwasserstoffen oder Mercaptanen zum Polymerisationsansatz auf die gewünschte Höhe eingestellt werden.

Die erfindungsgemäßen Haftklebstoffe sind klebrige, zähe Massen, die in ihren Eigenschaften dem in der Aufgabenstellung der Erfindung geforderten Eigenschaftsbild entsprechen. Zudem lassen sich in vielen Fällen die haftklebend ausgerüsteten Artikel vom Untergrund wieder ablösen, ohne daß daran Klebstoffreste zurückbleiben.

Die erfindungsgemäßen Haftkleber lassen sich in geschmolzenem Zustand mit für den Schmelzauftrag üblichen Vorrichtungen auf die Träger aufbringen, z.B. mit Düsen- oder Walzenauftragssystemen. Beispiele für geeignete Trägermaterialien sind Textilien, Metallfolien, Papier und Kunststoffe. Besonders geeignet sind die erfindungsgemäßen Haftkleber für Kunststoffolien, insbesondere aus PVC.

Überraschenderweise ist das Haft- und Klebevermögen des erfindungsgemäßen Haftklebers im allgemeinen gegenüber z.B. dem Haftkleber der DE—AS 22 53 245 auf nicht haftungsverbessernd vorbehandelten Trägern, insbesondere Kunststoffolien, stark verbessert.

Werden die erfindungsgemäßen Haftkleber auf weichmacherhaltige Träger, z.B. aus Kunststoff, insbesondere auf weichmacherhaltige Kunststoffolien, besonders vorzugsweise auf solche aus PVC, aufgetragen, werden sie vorzugsweise ebenfalls mit Weichmachern formuliert/abgemischt.

Derartige Haftklebermischungen enthalten dann vorzugsweise 60 bis 85 Gew.-% eines oder mehrerer der vorstehend definierten Pfropfcopolymerisate und 15 bis 40 Gew.-% eines oder mehrerer Weichmacher, bezogen auf das Gemisch aus Pfropfcopolymerisaten und Weichmachern.

Überraschenderweise lassen sich im allgemeinen mit diesen Haftklebern aus Pfropfcopolymerisaten und Weichmachern beschichtete Folien wieder von Substraten abziehen, ohne daß sich der Haftkleber von der Trägerfolie ablöst, auch wenn deren Oberfläche nicht aufwendig haftverbessernd vorbehandelt worden ist.

Bevorzugt als erfindungsgemäß enthaltene Weichmacher sind Ester von Carbonsäuren mit Alkoholen mit 4 bis 13 Kohlenstoffatomen und/oder tert. Phosphorsäureester mit gegebenenfalls substituierten Alkylgruppen mit 2 bis 10 Kohlenstoffatomen und/oder gegebenenfalls alkylsubstituierten Phenylgruppen. Besonders bevorzugte Carbonsäureester sind Diester der Phthalsäure mit Alkoholen mit 4 bis 13, vorzugsweise 4 bis 8 Kohlenstoffatomen, außerdem Diester der Sebacinsäure und der Adipinsäure mit Alkoholen mit 6 bis 10 Kohlenstoffatomen. Besonders bevorzugte tert. Phosphorsäureester sind z.B. Trikresyl-, Dikresylphenyl-, Kresyldiphenyl-, Triphenyl-, Xylenyldiphenyl-, Dixylenylphenyl-, Tris(chloräthyl)-, Diphenyloctyl, Phenyldioctyl- und Trioctylphosphat. Die Monomerweichmacher können selbstverständlich einzeln oder als Gemisch enthalten sein.

Den erfindungsgemäßen Haftklebern können auch weitere übliche Zusätze zugemischt sein, z.B. Kolophonium, Kolophoniumderivate, Cumarol-, Inden-, Phenol- und Kohlenwasserstoffharze, Wachse, Paraffinöle, Lösungsmittel, Pigmente, andere Polymerisate und/oder lösliche Farbstoffe. Gegebenenfalls werden solche Zusätze vorzugsweise bis zu insgesamt etwa 25 Gew.-%, besonders vorzugsweise bis zu etwa 15 Gew.-%, bezogen auf die fertige Mischung, zugesetzt.

In den folgenden Beispielen werden Angaben über Tack (Oberflächenklebrigkeit), Schälfestigkeit (Klebkraft) und Haftung auf mit Monomerweichmacher plastifizierter PVC-Folie von mit erfindungsgemäßen Haftklebstoffen hergestellten Beschichtungen gemacht.

Unter dem mehrmals benutzten Ausdruck "Klebestreifen" werden Streifen aus flexiblem, folienartigen Trägermaterial, beschichtet mit einem Film aus einem erfindungsgemäßen Haftklebstoff verstanden.

Die geprüften Haftklebstoffe wurden für alle Messungen mit einem Rakel bei Temperaturen der Klebstoffschmelze von 130°C bis 180°C in einer Dicke von 25 g/m² auf die Trägermaterialien aufgetragen, oder es wurde der Klebstofffilm auf silikonisiertem Papier hergestellt und auf das Trägermaterial überkaschiert (Umkehrverfahren).

Den zahlenmässigen Angaben liegen folgende Bestimmungsmethoden zugrunde:

a) Tack (Oberflächenklebrigkeit):

Ein 20 cm langer und 2,5 cm breiter Klebestreifen (Trägermaterial: polymerweichmacherhaltiges PVC, 0.1 mm dick) wird in Form einer "Schlaufe" senkrecht hängend mit der Klebstoffschicht nach außen in den oberen Backen einer Zugprüfmaschine eingespannt. Am unteren Backen wird waagrecht eine sorgfältig gereinigte Glasplatte befestigt. Anschließend wird die "Schlaufe" durch Zusammenfahren der beiden Backen der Zugprüfmaschine senkrecht mit einer Geschwindigkeit von 100 mm/min auf die waagrecht befestigte, sorgfältig gereinigte Glasplatte ohne Druckanwendung in einer Länge von etwa 3 cm aufgelegt. Danach erfolgt sofort mit gleicher Geschwindigkeit der Abzug des Klebestreifens von der Glasoberfläche. Die höchste für das Abziehen der "Schlaufe" benötigte Kraft dient als Maß für die Oberflächenklebrigkeit.

Der angegebene Wert ist der Mittelwert aus 5 Einzelmessungen, wobei jedesmal ein frischer Klebestreifen und eine frische Glasoberfläche verwendet werden.

b) Schälfestigkeit (Klebkraft)

Ein 20 cm langer und 2,5 cm breiter Klebestreifen (dergleichen Art wie unter a) wird von einem Ende ausgehend in einer Länge von ca. 12 cm auf eine sorgfältig gereinigte Stahlplatte aus V4A-Stahl blasenfrei aufgelegt. Durch 5-maliges Walzen (hin und her) mit einer 2,2 kg schweren, mit Silikongummi überzogenen Stahlwalze wird der Klebestreifen angedrückt. Nach 8-minütiger bzw. 24-stündiger Lagerung bei 23°C und 50% relativer Luftfeuchtigkeit wird der Klebestreifen mit einer Geschwindigkeit von 78 mm/min im 180°-Winkel über eine Länge von 5 cm abgezogen. Die dazu benötigte durchschnittliche Kraft wird gemessen. Die angegebenen Werte sind Mittelwerte aus jeweils 5 Einzelmessungen.

Die Reinigung der bei den Untersuchungen benutzten Stahlplatten erfolgt durch (in der angegebenen Reihenfolge) mechanisches Entfernen von sichtbaren Verschmutzungen mit Hilfe von Wasser und gegebenenfalls Reinigungsmitteln, Spülen mit destilliertem Wasser, Lagern in einem Methyläthylketon-Bad und in einem Äthanol-Bad. Vor der Benutzung der so gereinigten Testoberflächen werden die Platten mindestens 48 Stunden im Klimaraum bei 23°C und 50% rel. Luftfeuchtigkeit gelagert.

c) Haftung auf Weich-PVC-Folie

Die Haftung auf einer monomerweichmacherhaltigen PVC-Folie wurde nach mehreren Methoden beurteilt.

Als Testfolie diente die matte Seite einer 0,1 mm starken, mit Monomerweichmacher plastifizierten weißen PVC-Folie, wie sie handelsüblich für Dekorationsfolien eingesetzt wird.

Für die erste Art der Prüfung wird ein Klebstofffilm von 25 g/m² auf die nicht haftungsverbessernd vorbehandelte Testfolie aufgebracht.

Anschließend wird die Beschichtung mit Silikonpapier abgedeckt und eine Woche bei Raumtemperatur gelagert.

Anschließend wird ein Klebestreifen von 2,5 cm Breite und 20 cm Länge auf seiner ganzen Fläche gleichmässig mit einer haftungsverbessernd vorbehandelten, 0,1 mm starken Weich-PVC-Folie (Hilfs-PVC-Folie) verklebt. Um eine sehr gute Verklebung sicherzustellen, wird der Verbund Trägerfolie (nicht vorbehandelt)/Klebstofffilm/Hilfs-PVC-Folie (vorbehandelt) in einer Flachpresse mit einem Druck von ca. 25 bar 3 Minuten lang gepreßt, 15 Minuten bei 60°C getempert und anschließend nochmals 3 Minuten mit ca. 25 bar gepreßt. Die haftungsverbessernde Vorbehandlung der Hilfsfolie erfolgt durch Auftrag eines Haftvermittlers oder durch elektrische Entladung (Corona).

Der Verbund wird mit einer Zugprüfmaschine getrennt, indem ein Ende der Trägerfolie in den oberen Backen und das entsprechende Ende der Hilfs-PVC-Folie in den unteren Backen der Zugprüfmaschine eingespannt wird und die Backen mit einer Geschwindigkeit von 80 mm/min auseinandergefahren werden. Über eine Klebeverbundlänge von 5 cm wird der Mittelwert der zum Auftrennen nötigen Kraft registriert.

Beim Trennen des Klebeverbundes muß darauf geachtet werden, daß das noch verklebte Ende des Verbundes mit den beiden bereits getrennten Folienteilen möglichst genau einen 90°-Winkel einschließt.

Beim Auftrennen kann der Klebeverbund an drei Stellen brechen: an der Fläche Klebstofffilm/Trägerfolie (nicht haftungsverbessernd vorbehandelt), im Klebstofffilm (Spalten des Klebstofffilms) und an der Fläche Klebstofffilm/Hilfs-PVC-Folie (haftungsverbessernd vorbehandelt). Der letzte Fall kann unberücksichtigt bleiben, da er in der Praxis nicht auftritt.

Von den beiden anderen Fällen wird derjenige eintreten, für den die geringere Zugkraft nötig ist.

Wird an der Fläche Klebstofffilm/Trägerfolie (nicht haftungsverbessernd vorbehandelt) getrennt (Adhäsionsbruch), so wird die gemessene Kraft als Maß für die Folienhaftung verwendet.

Tritt der Bruch im Klebstofffilm auf, d.h. spaltet der Klebstofffilm (Kohäsionsbruch), so wird die gemessene Kraft als Maß für die Kohäsion des Klebstoffs hergenommen. In diesem Fall kann die Folienhaftung nicht mehr erfaßt werden, da sie größer als die Kohäsion sein muß und nur die kleinere der beiden Kräfte gemessen werden kann.

d) Trennung von miteinander verklebten Klebeschichten

Eine zweite, mehr qualitative Prüfung auf ausreichende Folienhaftung besteht darin, zwei mit einem Film des gleichen erfindungsgemäßen Haftklebstoffs beschichtete Klebestreifen aus nicht haftungsverbessernd vorbehandelter monomerweichmacherhaltiger PVC-Folie Klebstoffilm gegen Klebstoffilm aufeinander zu legen, durch 5-maliges Rollen (hin und her) mit einer mit Silikongummi überzogenen 2,2 kg schweren Stahlwalze zusammenzuwalzen und den Verbund nach 10 Minuten von Hand wieder trennen. Dabei soll auf beiden Folien eine etwa gleiche Menge an Klebstoff bleiben (Spalten im Klebstoffilm), d.h. ein Ablösen des Klebstoffilms von einer Folie (Klebstoffübertrag) ist unerwünscht.

Die Bestimmung der K-Werte der Polymerisate erfolgt nach Fikentscher, gemessen in 1%-iger acetonischer Lösung, bezogen auf das Pfropfcopolymere.

Die Viskositäten der Polymerisate bzw. der Klebstoffmischungen werden mit einem Konsistometer der Fa. Haake Meßtechnik GmbH gemessen. Es wird die Meßeinrichtung VIIg benutzt. Die Vorschubgeschwindigkeit der Düse wird durch entsprechende Belastung auf 0,1 mm/sec eingestellt. Die Angaben der Meßwerte des Tack, der Schälfestigkeit und der Haftung auf Weich-PVC-Folie in "Newton" beziehen sich stets auf die Breite des Klebestreifens von 2,5 cm.

Beispiel 1

In einem 2 l Reaktionsgefäß, das mit Rührer, Rückflußkühler, Stickstoffeinleitungsrohr und Innenthermometer ausgestattet ist, werden 65 g eines Äthylen-Vinylacetat-Copolymeren mit einem Vinylacetatgehalt von 40 Gew.-% und einem Schmelzindex von $i_2$=60 in einer Mischung aus 400 g Vinylacetat, 170 g Vinyllaurat, 35 g N - Vinyl - 2 - Pyrrolidon, 0,4 g Acetaldehyd und 60 g Diisodecylphthalat unter Rückfluß und Rühren bei 70°C gelöst und auf Raumtemperatur abgekühlt. Dann wurden 1,2 g Benzoylperoxid und 0,5 g 2,2 - Bis - (tert. - butylperoxy) - butan hinzugefügt und unter Rühren bei schwachem Stickstoffstrom durch kurzes Aufheizen die Polymerisation eingeleitet. Die Hauptphase der Polymerisation setzte bei einer Innentemperatur von 65°C ein und war nach ca. 4 Stunden unter Temperaturanstieg auf 75°C beendet. Es wurden 0,8 g tert. - Butylperpivalat zugegeben und die Temperatur wurde langsam innerhalb von 60 Minuten auf 130°C erhöht, wobei der Rückfluß zum Erliegen kam. Die Temperatur wurde noch 30 Minuten auf 130°C gehalten. Man erhielt eine klare, homogene und stippenfreie Polymerisationsschmelze, die nach Abkühlen zu einer zähelastischen klebrigen Masse erstarrte. Der K-Wert des Pfropfpolymerisats betrug 61.

Ein Abmischung des erhaltenen weichmacherhaltigen Polymerisates mit weiteren 270 g Diisodecylphthalat, 50 g Polyäthylenwachs vom Schmelzpunkt 100°C und 50 g Kohlenwasserstoffharz vom Erweichungspunkt (Ring und Kugel) 100°C ergab eine Klebstoffmischung mit einer Viskosität von 39000 mPa.s bei 150°C.

Der Tack von mit der Klebstoffmischung hergestellten Beschichtungen betrug 3 N. Die Schälwerte nach 8 Minuten und 24 Stunden Verklebungsdauer waren 4 N und 8 N. Beim Test der Haftung auf mit Monomerweichmacher plastifizierter PVC-Folie nach der Prüfmethode c wurde Spalten im Klebstoffilm bei einer Kraft von 8 N gefunden, d.h. die Folienhaftung war größer als 8 N. Ein Test nach der Prüfmethode d ergab Spalten im Klebstoffilm.

Vergleichsversuch A

In der gleichen Anordnung wie in Beispiel 1 beschrieben wurden 55 g Äthylen-Vinylacetat-Copolymer mit einem Vinylacetatgehalt von 40 Gew.-% und einem Schmelzindex von $i_2$=60 in einer Mischung von 330 g Vinylacetat, 155 g Vinyllaurat und 60 g Diisodecylphthalat bei 70°C gelöst und anschließend wieder abgekühlt. Nach Zugabe von 0,8 g Benzoylperoxid, 0,5 g 2,2 - Bis - (tert. - butylperoxy) - butan und 1 g Acetaldehyd wurde erwärmt. Bei 65°C Innentemperatur setzte die Polymerisation ein. Nach ca. 90 Minuten war die Polymerisation unter Anstieg der Innentemperatur auf 75°C beendet. Es wurden 0,8 g tert. - Butylperpivalat zugegeben und die Temperatur wurde langsam innerhalb von 60 Minuten auf 130°C erhöht. Die temperatur wurde nun weitere 30 Minuten auf dieser Höhe gehalten.

Der Schmelze wurden bei etwa 130°C weitere 200 g Diisodecylphthalat und 45 g Polyäthylenwachs vom Schmelzpunkt 100°C und 45 g Kohlenwasserstoffharz vom Erweichungspunkt 100°C zugemischt. Man erhielt eine klare, homogene Klebstoffschmelze, die beim Abkühlen eine zähelastische klebrige Masse bildete. Der K-Wert des Pfropfpolymerisats betrug 62. Die Viskosität der Klebstoffschmelze lag bei 150°C bei 37 000 mPa.s.

Der Tack von mit dem Klebstoff hergestellten Beschichtungen betrug 2,8 N. Die Schälwerte nach 8 Minuten und 24 Stunden Verklebungsdauer waren 4,5 und 7 N.

Beim Test der Haftung auf mit Monomerweichmacher plastifizierter PVC-Folie nach der Prüfmethode c wurde ein Meßwert für die Folienhaftung von 5,7 N gefunden. Beim Test nach der Prüfmethode d wurde nahezu vollständiger Klebstoffübertrag beobachtet.

Beispiel 2

In der gleichen Anordnung wie in Beispiel 1 beschrieben wurden 32 g eines Äthylen-Vinylacetat-Copolymeren mit einem Vinylacetatanteil von 40 Gew.-% und einem Schmelzindex von $i_2$=60 sowie 32 g Polyvinylisobutyläther mit K-Wert=120 in einer Mischung aus 360 g Vinylacetat, 200 g Vinyllaurat und 24 g N - Vinyl - 2 - Pyrrolidon unter Erwärmen auf 70°C gelöst. Anschließend wurde wieder abgekühlt. Nach Zugabe von 1,2 g Benzoylperoxid und 0,5 g 2,2 - Bis - (tert. - butylperoxy) - butan wurde erwärmt. Bei etwa 65°C Innentemperatur setzte die Polymerisation ein.

Nach 3 Stunden Polymerisationsverlauf bei etwa 71°C wurden im Abstand von 60 Minuten je 1 g tert. Butylperpivalat zugegeben. Anschließend wurde die Temperatur langsam innerhalb von 60 Minuten auf 120°C erhöht, wobei der Rückfluß zum Stillstand kam. Man erhielt eine klare, stippenfreie, zähe Schmelze. Der K-Wert des Polymerisates betrug 59. In die Schmelze wurden 270 g Diisodecylphthalat, 45 g Polyäthylenwachs vom Schmelzpunkt 100°C und 45 g Kohlenwasserstoffharz vom Erweichungspunkt 100°C eingearbeitet.

Die Viskosität der erhaltenen homogenen Mischung betrug bei 150°C 22 000 mPa.s. Der Tack von mit dem Klebstoff hergestellten Beschichtungen betrug 4,3 N. Die Schälwerte nach 8 Minuten und 24 Stunden Verklebungsdauer wurden mit 3 N und 9 N ermittelt.

Beim Test der Haftung auf mit Monomerweichmacher plastifizierter PVC-Folie nach der Prüfmethode c wurde Spalten im Klebstofffilm (Kohäsionsbruch) bei einer Kraft von 6,5 N (Kohäsionswert) beobachtet, d.h. die Folienhaftung war größer als 6,5 N. Ein Test nach der Prüfmethode d ergab Spalten im Klebstofffilm.

Vergleichsversuch B

In der gleichen Anordnung wie in Beispiel 1 beschrieben wurden 28 g eines Äthylen-Vinylacetat-Copolymeren mit einem Vinylacetatgehalt von 40 Gew.-% und einem Schmelzindex von $i_2$=60 sowie 29 g Polyvinylisobutyläther mit K-Wert=120 in einer Mischung aus 330 g Vinylacetat und 170 g Vinyllaurat unter Erwärmen auf etwa 70°C gelöst. Nach Abkühlen wurden 0,8 g Benzoylperoxid und 1,2 g 2,2 - Bis - (tert. - butylperoxy) - butan zugegeben. Beim abermaligen Erwärmen sprang die Polymerisation bei etwa 65°C an. Nach 2 Stunden war die Hauptpolymerisation beendet. Die Innentemperatur betrug etwa 75°C. Die Reaktionsmasse wurde innerhalb von 60 Minuten auf 120°C erwärmt, wobei der Rückfluß zum Stillstand kam. Der K-Wert des Polymeren betrug 57. In die Schmelze wurden 240 g Diisodecylphthalat, 40 g Polyäthylenwachs vom Schmelzpunkt 100°C und 40 g eines Kohlenwasserstoffharzes vom Erweichungspunkt 100°C eingearbeitet.

Die Viskosität der homogenen, stippenfreien Klebstoffmischung betrug bei 150°C 20 000 mPa.s. Der Tack von mit dem Klebstoff hergestellten Beschichtungen war 4,1 N. Die Schälwerte nach 8 Minuten und 24 Stunden Verklebungsdauer wurden mit 2 N und 6 N ermittelt. Beim Test der Haftung auf mit Monomerweichmacher plastifizierter PVC-Folie nach der Prüfmethode c wurde teils Adhäsionsbruch, teils Kohäsionsbruch bei 5,9 N beobachtet, d.h. die Folienhaftung und die Kohäsion sind etwa gleich groß. Ein Test nach der Prüfmethode d ergab praktisch vollständigen Klebstoffübertrag.

Beispiel 3

In der gleichen Anordnung wie in Beispiel 1 beschrieben wurden 65 g eines Äthylen-Vinylacetat-Copolymeren mit einem Vinylacetatgehalt von 18 Gew.-% und einem Schmelzindex von $i_2$=150 in einer Mischung von 370 g Vinylacetat, 190 g Vinyllaurat, 29 g N - Vinyl - 2 - Pyrrolidon und 150 g Diisodecylphthalat unter Erwärmen auf etwa 70°C gelöst und anschließend auf Raumtemperatur abgekühlt. Man gab 1,5 g Benzoylperoxid und 1 g 2,2 - Bis - (tert. - butylperoxy) - butan zu und erwärmte die Mischung unter Rühren, wobei die Hauptphase der Polymerisation bei 65°C Innentemperatur einsetzte und während 4 Stunden bei etwa 72°C Innentemperatur ablief. Anschließend wurden 0,8 g tert.-Butylperpivalat zugegeben und während einer Stunde langsam auf 130°C erwärmt. Dabei kam der Rückfluß zum Erliegen. Der K-Wert des erhaltenen Pfropfpolymerisates betrug 62.

Nach Einarbeitung von 50 g Polyäthylenwachs vom Schmelzpunkt 100°C, 20 g Kohlenwasserstoffharz vom Erweichungspunkt 110°C und 140 g Diisodecylphthalat wurde eine Klebstoffmischung mit einer Viskosität von 27 000 mPa.s bei 150°C erhalten.

Der Tack von mit der Klebstoffmischung hergestellten Beschichtungen betrug 4,5 N. Die Schälwerte nach 8 Minuten und 24 Stunden Verklebungsdauer waren 5,5 N und 9 N. Beim Test der Haftung auf mit Monomerweichmacher plastifizierter PVC-Folie nach der Prüfmethode c wurde ein Folienhaftungswert von 5,3 N gefunden.

Vergleichsversuch C

In der gleichen Anordnung wie in Beispiel 1 beschrieben wurden 55 g eines Äthylen-Vinylacetat-Copolymeren mit einem Vinylacetatgehalt von 18 Gew.-% und einem Schmelzindex von $i_2$=150 in einer Mischung von 335 g Vinylacetat, 165 g Vinyllaurat und 120 g Diisodecylphthalat unter Erwärmen gelöst und anschließend abgekühlt. Es wurden 1 g Benzoylperoxid und 0,8 g 2,2 - Bis - (tert. - butylperoxy) - butan zugegeben und die Polymerisation unter Rühren und Erwärmen gestartet. Sie sprang bei etwa 65°C an und war nach 90 Minuten größtenteils beendet. In dieser Zeit stieg die Temperatur langsam auf 74°C an. Es wurde noch eine weitere halbe Stunde auf 100°C erwärmt, wobei der Rückfluß zum Erliegen kam. Der K-Wert des erhaltenen Pfropfpolymerisates betrug 66.

Nach Zugabe von 45 g Polyäthylenwachs vom Schmelzpunkt 100°C, 20 g Kohlenwasserstoffharz vom Erweichungspunkt 110°C und 120 g Diisodecylphthalat wurde eine Klebstoffmischung mit einer Viskosität von 35 000 mPa.s bei 150°C erhalten.

Der Tack mit der Klebstoffmischung hergestellten Beschichtungen betrug 4 N. Die Schälwerte nach 8 Minuten und 24 Stunden Verklebungsdauer waren 5 N und 8 N. Beim Test der Haftung auf mit Monomerweichmacher plastifizierter PVC-Folie nach der Prüfmethode c wurde ein Folienhaftungswert von 2,9 N gefunden.

**Patentansprüche**

1. Haftklebstoffe, enthaltend Pfropfcopolymere der Zusammensetzung 5 bis 30 Gew.-% Pfropfgrundlage, bestehend aus einem Copolymeren aus 40 bis 85 Gew.-% Ethyleneinheiten und 15 bis 60 Gew.-% Vinylacetateinheiten sowie gegebenenfalls bis zu 10 Gew.-% Einheiten weiterer ungesättigter Verbindungen und/oder Polyvinyl ethern und/oder Copolymeren von Ethylen mit Estern der Acrylsäure und/oder der Methacrylsäure mit Alkoholen mit 2 bis 8 Kohlenstoffatomen, und 70 bis 95 Gew.-% aufgepfropfter Monomereinheiten, die ihrerseits aus

a) 30 bis 80 Gew.-% Vinylestereinheiten von Carbonsäuren mit 2 bis 4 Kohlenstoffatomen,

b) 20 bis 70 Gew.-% Vinylestereinheiten von Carbonsäuren mit 6 bis 18 Kohlenstoffatomen und/oder Estereinheiten alpha, beta-ungesättigter Carbonsäuren mit Alkoholen mit 3 bis 18 Kohlenstoffatomen und/oder Mono- oder Diestereinheiten ungesättigter Dicarbonsäuren mit Alkoholen mit 3 bis 18 Kohlenstoffatomen,

c) 0,5 bis 15 Gew.-% N-Vinyl-2-Pyrrolidon, und

d) 0 bis 20 Gew.-% weiteren olefinisch ungesättigten copolymerisierbaren Monomereinheiten bestehen.

2. Haftklebstoffe nach Anspruch 1, dadurch gekennzeichnet, daß das Ethylen-Vinylacetat-Copolymere durch die anderen genannten in dem Monomerengemisch löslichen Polymeren zu bis zu 75 Gew.-% ersetzt ist.

3. Haftklebstoff nach Anspruch 1, dadurch gekennzeichnet, daß als Pfropfgrundlage das Ethylen-Vinylacetat-Copolymere verwendet worden ist.

4. Haftklebstoffe, enthaltend 60 bis 85 Gew.-% eines oder mehrerer Polymeren nach einem der Ansprüche 1 bis 3 und 15 bis 40 Gew.-% eines oder mehrerer Weichmacher.

5. Haftklebstoffe nach Anspruch 4, dadurch gekennzeichnet, daß als Weichmacher Ester organischer Carbonsäuren mit Alkoholen mit 4 bis 13 Kohlenstoffatomen enthalten sind.

6. Haftklebstoffe nach Anspruch 4, dadurch gekennzeichnet, daß als Weichmacher tertiäre Phosphorsäureester mit gegebenenfalls substituierten Alkylgruppen mit 2 bis 10 Kohlenstoffatomen und/oder gegebenenfalls alkylsubstituierten Phenylgruppen enthalten sind.

7. Verfahren zur Herstellung des Pfropfpolymeren gemäß einem der Ansprüche 1 bis 3, dadurch gekennzeichnet, daß das (Co-)Polymere in dem Monomerengemisch gelöst wird und daß in Gegenwart von Radikalbildnern in Mengen von 0,02 bis 4 Gew.-%, bezogen auf Monomerengemisch, bei −20 bis 150°C gepfropft wird.

8. Verwendung der Haftklebstoffe gemäß einem der Ansprüche 1 bis 6 als Schmelzhaftklebstoffe.

**Revendications**

1. Adhésifs sensibles à la pression caractérisés en ce qu'ils contiennent des copolymères greffés comportant 5 à 30% en poids d'une base de greffage consistant en un copolymère formé de 40 à 85% en poids de motifs éthylène et de 15 à 60% en poids de motifs acétate de vinyle et contenant éventuellement jusqu'à 10% en poids de motifs d'autres composés insaturés et/ou en poly(éthers vinyliques) et/ou en copolymères de l'éthylène avec des esters de l'acide acrylique et/ou de l'acide méthacrylique avec des alcools ayant 2 à 8 atomes de carbone, et 70 à 95% en poids de motifs monomères greffés, qui consistent pour leur part en:

a) 30 à 80% en poids de motifs ester vinylique d'acide carboxylique ayant 2 à 4 atomes de carbone,

b) 20 à 70% en poids de motifs ester vinylique d'acide carboxylique ayant 6 à 18 atomes de carbone et/ou motifs ester d'acides insaturés en alpha-bêta avec des alcools ayant 3 à 18 atomes de carbone et/ou des motifs monoesters ou diesters d'acides dicarboxyliques insaturés avec des alcools ayant 3 à 18 atomes de carbone,

c) 0,5 à 15% en poids de N-vinylpyrrolidone-2, et

d) 0 à 20% en poids d'autres motifs monomères copolymérisables, à insaturation oléfinique.

2. Adhésifs sensibles à la pression selon la revendication 1, caractérisés en ce que le copolymère éthylène/acétate de vinyle est remplacé, jusqu'à une proportion de 75% en poids au maximum, par les autres polymères cités solubles dans le mélange des monomères.

3. Adhésifs sensibles à la pression selon la revendication 1, caractérisés en ce que l'on a utilisé comme base de greffage le copolymère éthylène/acétate de vinyle.

4. Adhésifs sensibles à la pression caractérisés en ce qu'ils contiennent 60 à 85% en poids d'un ou plusieurs polymères selon l'une des revendications 1 à 3 et 15 à 40% en poids d'un ou plusieurs plastifiants.

5. Adhésifs sensibles à la pression selon la revendication 4, caractérisés en ce qu'ils contiennent comme plastifiants des esters d'acides carboxyliques organiques avec des alcools comportant 4 à 13 atomes de carbone.

6. Adhésifs sensibles à la pression selon la revendication 4, caractérisés en ce qu'ils contiennent comme plastifiants des esters tertiaires d'acide phosphorique comportant des groupes alkyles éventuellement substitués ayant 2 à 10 atomes de carbone et/ou des groupes phényles ayant éventuellement un ou des substituants alkyles.

7. Procédé de préparation du polymère greffé selon l'une quelconque des revendications 1 à 3, caractérisé en ce qu'on dissout le (co)-polymère dans le mélange des monomères et en ce qu'on effectue un greffage, entre —20°C et +150°C, en opérant en présence de générateurs de radicaux libres, présents en des quantités de 0,02 à 4% en poids, par rapport au mélange des monomères.

8. Utilisation des adhésifs sensibles à la pression selon l'une quelconque des revendications 1 à 6 comme adhésifs applicables à l'état fondu.

**Claims**

1. Pressure-sensitive adhesives containing graft copolymers comprising 5 to 30% by weight of graft base, consisting of a copolymer of 40 to 85% by weight of ethylene units and 15 to 60% by weight of vinyl acetate units, and optionally up to 10% by weight of units of other unsaturated compounds, and/or polyvinyl ethers and/or copolymers of ethylene with esters of the acrylic acid and/or the methacrylic acid with alcohols having from 3 to 8 carbon atoms, and 70 to 95% by weight of monomer units grafted thereon, which for their part consist of

a) 30 to 80% by weight of units of vinyl esters of carboxylic acids having from 2 to 4 carbon atoms,

b) 20 to 70% by weight of units of vinyl esters of carboxylic acids having from 6 to 18 carbon atoms and/or units of esters of $\alpha$, $\beta$-unsaturated carboxylic acids with alcohols having from 3 to 18 carbon atoms and/or units of monoesters or diesters of unsaturated dicarboxylic acids with alcohols having from 3 to 18 carbon atoms,

c) 0.5 to 15% by weight of N-vinyl-2-pyrrolidone and

d) 0 to 20% by weight of other olefinically unsaturated copolymerizable monomer units.

2. Pressure-sensitive adhesives according to claim 1, characterized in that the ethylene/vinyl acetate copolymer is replaced by up to 75% by weight of the other polymers soluble in the monomer mixture.

3. Pressure-sensitive adhesives according to claim 1, characterized in that said ethylene vinyl acetate copolymer is used as the graft base.

4. Pressure-sensitive adhesives, containing from 60 to 85% by weight of one or more polymers according to one of claims 1 to 3 and from 15 to 40% by weight of one or more plasticizers.

5. Pressure-sensitive adhesives according to claim 4, characterized in that as plasticizers there are used esters of organic carboxylic acids with alcohols having from 4 to 13 carbon atoms.

6. Pressure-sensitive adhesives according to claim 4, characterized in that as plasticizers there are used tertiary phosphoric acid esters with optionally substituted alkyl groups having from 2 to 10 carbon atoms and/or optionally alkyl-substituted phenyl groups.

7. Process for the manufacture of the graft polymer according to one of claims 1 to 3, characterized in that the (co-)polymer is dissolved in the monomer mixture and, in the presence of radical initiators in amounts ranging from 0.02 to 4% by weight, calculated on the monomer mixture, grafting is carried out at —20 to 150°C.

8. Use of the pressure-sensitive adhesives according to one of claims 1 to 6 as a hot melt pressure-sensitive adhesives.